# EUROPÄISCHE PATENTANMELDUNG

(11) **EP 4 570 053 A1**
(43) Veröffentlichungstag der Anmeldung: **18.06.2025**
(21) Anmeldenummer: 24217826.7
(22) Anmeldetag: 05.12.2024
(51) Int. Cl.: A01D 43/08, A01D 43/10, A01D 75/18

(54) **MÄHWERK**

(30) Priorität: 11.12.2023 DE 102023134641
(71) Anmelder: CLAAS Saulgau GmbH, 88348 Bad Saulgau (DE)
(72) Erfinder: Frye, Simon, 88348 Bad Saulgau (DE); Pflanze, Sascha, 88348 Braunenweiler (DE)

(57) **Zusammenfassung**

Die Erfindung betrifft ein Mähwerk (1), mit mehreren Mähorganen, die unter Ausbildung eines Mähbalkens (2) nebeneinander positioniert sind und mit einem in Gutflussrichtung von gemähtem Erntegut (3) gesehen hinter dem Mähbalken (2) angeordneten Walzenaufbereiter (4), der eine obere Aufbereitungswalze (5) und eine untere Aufbereitungswalze (6) aufweist, wobei ein Spalt zwischen den Aufbereitungswalzen (5, 6), durch welchen das Erntegut (3) hindurch transportiert wird, abhängig von einer Menge des Ernteguts (3) veränderlich ist, und wobei eine Einrichtung zur Erkennung oder zum Auffinden von Fremdkörpern (12) im gemähten Erntegut (3) vorgesehen ist. (Fig. 2)

## Beschreibung

Die Erfindung betrifft ein Mähwerk gemäß dem Oberbegriff des Patentanspruchs 1.

Aus DE 10 2020 124 992 A1 ist ein Mähwerk mit mehreren Mähorganen bekannt, die unter Ausbildung eines Mähbalkens nebeneinander positioniert sind, mit einem in Gutflussrichtung von gemähtem Erntegut gesehen hinter dem Mähbalken angeordneten Walzenaufbereiter, der eine obere Aufbereitungswalze und eine untere Aufbereitungswalze aufweist, wobei die untere Aufbereitungswalze um eine untere, ortsfeste Drehachse drehbar ist, wobei die obere Aufbereitungswalze um eine obere, verlagerbare Drehachse derart drehbar ist, dass in Folge einer Verlagerung der oberen Drehachse relativ zur unteren Drehachse ein Spalt zwischen den Aufbereitungswalzen veränderlich ist.

Beim Ernten von Gras, Luzernen oder ähnlichen Erntegütern mit einem Mähwerk, das von einem Traktor als Trägerfahrzeug betrieben wird, werden schädliche Fremdkörper, wie Steine oder Holzstücke, im Erntegut erst im letzten Arbeitsschritt detektiert und dies auch nur dann, wenn ein entsprechend ausgestatteter Feldhäcksler, statt eines Ladewagens oder statt einer Ballenpresse zum Abfahren des Erntegutes verwendet wird.

Hiervon ausgehend ist es die Aufgabe der Erfindung, ein neuartiges Mähwerk zu schaffen.

Diese Aufgabe wird erfindungsgemäß durch die kennzeichnenden Merkmale des Patentanspruchs 1 gelöst.

Ein erfindungsgemäßes Mähwerk weist einen mehrere nebeneinander positionierte Mähorgane umfassenden Mähbalken auf, dem in Gutflussrichtung von gemähtem Erntegut gesehen hinter dem Mähbalken ein Walzenaufbereiter nachgeordnet ist, der eine obere und eine untere Aufbereitungswalze aufweist, wobei ein Spalt zwischen den Aufbereitungswalzen, durch welchen das Erntegut hindurch transportiert wird, abhängig von einer Menge des Ernteguts veränderlich ist, und wobei eine Einrichtung zur Erkennung oder zum Auffinden von Fremdkörpern im gemähten Erntegut vorgesehen ist.

Durch den Einsatz einer Einrichtung zur Erkennung oder zum Auffinden von Fremdkörpern, insbesondere von Steinen, am Mähwerk können schädliche Fremdkörper bereits frühzeitig aufgefunden und von der Wiese bzw. aus dem Erntegut entfernt werden. Dadurch können Schäden an nachfolgenden Maschinen besonders vorteilhaft verhindert werden.

Gemäß einer vorteilhaften Weiterbildung ist die untere Aufbereitungswalze um eine untere, ortsfeste Drehachse drehbar gelagert und die obere Aufbereitungswalze zur Anpassung des Spaltes an die Menge des Erntegutes um eine obere, verlagerbare Drehachse drehbar gelagert, so dass die obere Drehachse relativ zur unteren Drehachse verlagerbar ist, wobei die obere Drehachse dazu schwenkbar an Hebeln angeordnet ist und ein Winkelsensor vorgesehen ist, der die Auslenkung eines Hebels kontinuierlich erfasst und die erfassten Messsignale an eine Steuerungseinrichtung übermittelt, die dazu eingerichtet ist, aus den Messsignalen des Winkelsensors kontinuierlich einen Abstand zwischen den Drehachsen der Aufbereitungswalzen zu ermitteln und aus dem Abstand eine Geschwindigkeit und/oder eine Beschleunigung abzuleiten. Bei Überschreitung eines vorgegebenen Wertes der Geschwindigkeit und/oder der Beschleunigung generiert die Steuerungseinrichtung vorteilhaft ein Signal für das Auffinden eines Fremdkörpers im Erntegut.

Nach einer weiteren vorteilhaften Weiterbildung ist die obere Aufbereitungswalze an ihren beiden Enden jeweils schwenkbar an einem Hebel gelagert und an jedem Hebel ist ein Winkelsensor vorgesehen, die beide die erfassten Messsignale an die Steuerungseinrichtung übermitteln, und die Steuerungseinrichtung vergleicht die Abstände und/oder die Werte der Beschleunigung und/oder der Geschwindigkeit der beiden Winkelsensoren miteinander und ermittelt daraus die Position des Fremdkörpers in Richtung der Breite der Aufbereitungswalzen. Dadurch wird es einem Bediener vorteilhaft erleichtert, den Fremdkörper aus dem Erntegut zu entfernen.

Nach einer weiteren vorteilhaften Weiterbildung ist vorgesehen, dass die Steuerungseinrichtung das Signal für das Auffinden eines Fremdkörpers nur generiert, falls gleichzeitig auch der Abstand zwischen den Drehachsen einen vorgegebenen Wert überschreitet. Dadurch können vorteilhaft Fehlauslösungen vermieden werden.

Nach einer weiteren vorteilhaften Weiterbildung wird zur Erkennung von Fremdkörpern alternativ oder zusätzlich zu Winkelsensoren ein Beschleunigungssensor vorgesehen, der die Beschleunigung der oberen verlagerbaren Aufbereitungswalze in vertikaler Richtung ermittelt und die Beschleunigungswerte an die Steuerungseinrichtung übermittelt, die bei Überschreitung eines vorgegebenen Wertes der Beschleunigung ein Signal für das Auffinden eines Fremdkörpers generiert. Der Beschleunigungssensor wird vorzugsweise an einer Stirnseite der oberen Aufbereitungswalze angeordnet. Besonders bevorzugt wird an beiden Stirnseiten bzw. an beiden Längsenden der oberen Aufbereitungswalze ein Beschleunigungssensor angeordnet und beide Beschleunigungssensoren übermitteln die Beschleunigungswerte an die Steuerungseinrichtung. Die Steuerungseinrichtung vergleicht die Beschleunigungswerte der beiden Beschleunigungssensoren miteinander und ermittelt daraus die Position des Fremdkörpers in Richtung der Breite der Aufbereitungswalzen. Dadurch wird es einem Bediener vorteilhaft erleichtert, den Fremdkörper aus dem Erntegut zu entfernen.

Der oder die Beschleunigungssensoren werden vorzugsweise so am Mähwerk angeordnet, dass diese bei einer Verlagerung der oberen Aufbereitungswalze über einen langen Weg bewegt werden, wodurch vorteilhaft große Beschleunigungen messbar sind.

Nach einer weiteren vorteilhaften Weiterbildung ist Steuerungseinrichtung des Mähwerks dazu eingerichtet, Positionsdaten eines GPS-Systems zu empfangen und bei Auffinden oder Erkennen eines Fremdkörpers, dessen Positionsdaten zu speichern. Auf der Grundlage der Positionsdaten können Hinweise für, in der Erntekette nachfolgende, landwirtschaftliche Maschinen generiert werden, um deren Fahrer oder Bediener rechtzeitig vor Erreichen der Position des Fremdkörpers zu warnen.

Bevorzugte Weiterbildungen der Erfindung ergeben sich aus den Unteransprüchen und der Beschreibung. Nachfolgend werden die Merkmale der vorliegenden Erfindung anhand von Ausführungsbeispielen, ohne hierauf beschränkt zu sein, näher erläutert. In den zugehörigen schematischen Zeichnungen zeigt, die
- Fig. 1: eine Seitenansicht eines erfindungsgemäßen Mähwerks im Erntebetrieb,
- Fig. 2: eine Seitenansicht eines erfindungsgemäßen Mähwerks im Erntebetrieb mit einem Fremdkörper und die
- Fig. 3: eine Ansicht eines erfindungsgemäßen Mähwerks mit einem Fremdkörper in Gutflussrichtung von gemähtem Erntegut.

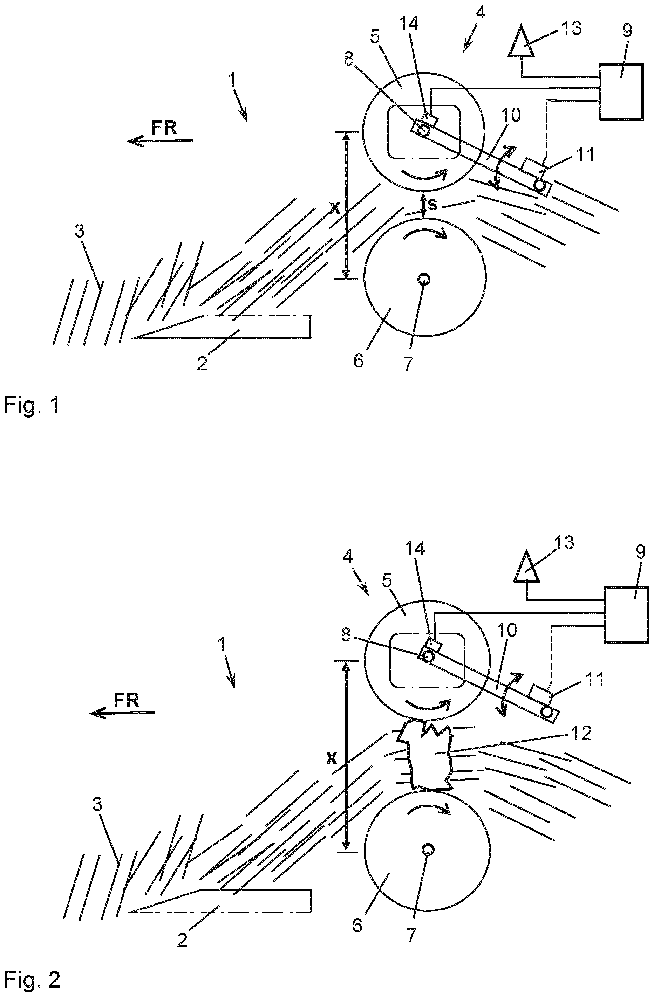

Fig. 1 zeigt eine stark schematisierte Seitenansicht eines erfindungsgemäßen Mähwerks 1 mit einem Mähbalken 2, der aus mehreren nebeneinander positionierten Mähorganen besteht, und dem in Gutflussrichtung von gemähtem Erntegut 3 gesehen, ein Walzenaufbereiter 4 nachgeordnet ist. Der Walzenaufbereiter 4 umfasst eine obere Aufbereitungswalze 5 und eine untere Aufbereitungswalze 6, zwischen welchen ein Spalt s gebildet ist und zwischen welchen das Erntegut 3 hindurch transportiert wird. Die obere Aufbereitungswalze 5 dreht sich in dieser Ansicht um eine Drehachse 8 gegen den Uhrzeigerdrehsinn und die untere Aufbereitungswalze 6 im Uhrzeigerdrehsinn um eine untere Drehachse 7, wobei sich der Spalt s abhängig von einer Menge des Ernteguts 3, welches zwischen den Aufbereitungswalzen 5, 6 hindurchtransportiert oder hindurchgefördert wird, verändert.

Das Mähwerk 1 wird in allgemein bekannter Weise von einem Trägerfahrzeug, wie einem Traktor, aufgenommen, angetrieben und zum Ernteprozess in Fahrtrichtung FR bewegt.

Die untere Drehachse 7 der unteren Aufbereitungswalze 6 ist ortsfest angeordnet und die obere Drehachse 8 der oberen Aufbereitungswalze 5 ist zur Anpassung des Spaltes s an die Menge des Erntegutes 3 verlagerbar angeordnet, so dass sich der Abstand x der Drehachsen 7, 8 und die Weite des Spaltes s verändern kann. Dazu ist die obere Drehachse 8 schwenkbar an Hebeln 10 angeordnet und an einem der Hebel 10 ist ein Winkelsensor 11 vorgesehen, der die Auslenkung des Hebels 10 kontinuierlich erfasst und die erfassten Messsignale an eine Steuerungseinrichtung 9 übermittelt.

Die Steuerungseinrichtung 9 ist dazu eingerichtet, aus den an sie übermittelten Messwerten des Winkelsensors 11 und der in ihr abgespeicherten Geometriedaten des Hebels 10 kontinuierlich die Weite des Spaltes s oder den Abstand x der Drehachsen 7, 8 der beiden Aufbereitungswalzen 5, 6 zu errechnen und aus dem sich ändernden Abstand x eine Geschwindigkeit und/oder eine Beschleunigung der vertikalen Bewegung der oberen Aufbereitungswalze 5 abzuleiten. Sobald die Steuerungseinrichtung 9 ein Überschreiten eines vorgegebenen Wertes der Geschwindigkeit und/oder der Beschleunigung erkennt, generiert sie ein Signal für das Auffinden bzw. das Erkennen eines Fremdkörpers 12 im Erntegut 3.

Die Fig. 2 zeigt eine weitere stark schematisierte Seitenansicht eines erfindungsgemäßen Mähwerks 1 mit einem Fremdkörper 12 im Erntegut 3. Es ist ersichtlich, dass der Abstand x der Drehachsen 7, 8 und der Spalt s zwischen den Aufbereitungswalzen 5, 6 aufgrund des Fremdkörpers 12 wesentlich größer sind als in Fig. 1.

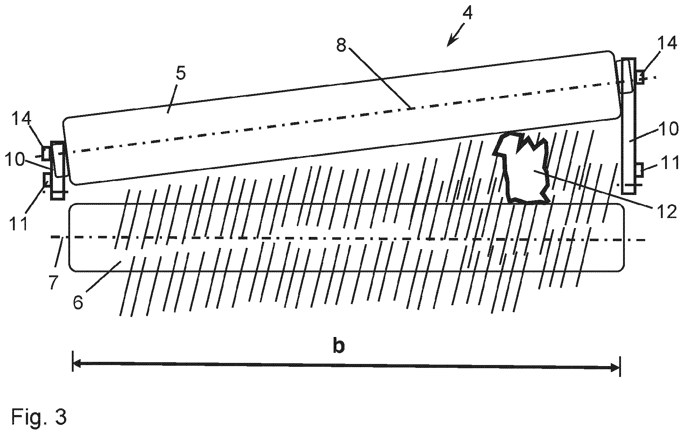

Die Fig. 3 zeigt eine Ansicht des Mähwerks 1 in Flussrichtung des gemähten Ernteguts 3, wobei ein Fremdkörper 12 zwischen die Aufbereitungswalze 5, 6 geraten ist. Der Fremdkörper 12 befindet sich rechts von der Mitte der Aufbereitungswalzen 5, 6 und hat dazu geführt, dass die obere Aufbereitungswalze 5 sich gegenüber der unteren Aufbereitungswalze 6 etwas schräg gestellt hat oder in anderen Worten verkippt ist. Weiterhin ist in Fig. 3 ersichtlich, dass die obere Aufbereitungswalze 5 jeweils an ihren beiden Enden oder Stirnseiten schwenkbar an einem Hebel 10 gelagert ist, um den Abstand x bzw. den Spalt s an unterschiedlich große Mengen von Erntegut 3 anzupassen. Dabei ist vorzugsweise an jedem Hebel 10 ein Winkelsensor 11 vorgesehen, welche die erfassten Messsignale beide an die Steuerungseinrichtung 9 übermitteln.

Die Steuerungseinrichtung 9 vergleicht die Abstände x und/oder die Werte der Beschleunigung und/oder der Geschwindigkeit der beiden Winkelsensoren 11 miteinander und ermittelt daraus die Position des Fremdkörpers 12 in Richtung der Breite b der Aufbereitungswalzen 5, 6.

Um Fehler bei der Erkennung bzw. beim Auffinden von Fremdkörpern zu verringern oder zu vermeiden, kann vorgesehen werden, dass die Steuerungseinrichtung 9 das Signal für das Auffinden eines Fremdkörpers 12 nur dann generiert, wenn gleichzeitig auch der Abstand x einen vorgegebenen Wert überschreitet.

Alternativ oder zusätzlich zum Winkelsensor 11 kann zur Erkennung von Fremdkörpern 12 ein Beschleunigungssensor 14 vorgesehen werden, der die Beschleunigung der oberen Aufbereitungswalze 5 in vertikaler Richtung ermittelt und die Beschleunigungswerte an die Steuerungseinrichtung 9 übermittelt. Bei Überschreitung eines vorgegebenen Wertes der Beschleunigung generiert die Steuerungseinrichtung 9 ein Signal für das Auffinden eines Fremdkörpers 12. Der Beschleunigungssensor 14 wird vorzugsweise an einer Stirnseite bzw. an einem Längsende der oberen Aufbereitungswalze 5 angeordnet.

Besonders bevorzugt wird an beiden Stirnseiten der oberen Aufbereitungswalze 5 jeweils ein Beschleunigungssensor 14 angeordnet, die beide die Beschleunigungswerte an die Steuerungseinrichtung 9 übermitteln. Die Steuerungseinrichtung 9 vergleicht die Beschleunigungswerte der beiden Beschleunigungssensoren 14 miteinander und ermittelt daraus die Position des Fremdkörpers 12 in Richtung der Breite b der Aufbereitungswalzen 5, 6.

Weiterhin ist die Steuerungseinrichtung 9 vorzugsweise dazu eingerichtet, Positionsdaten eines GPS-Systems 13 zur Bestimmung der aktuellen Position des Mähwerks 1 zu empfangen und bei Auffinden oder Erkennen eines Fremdkörpers 12, dessen Positionsdaten zu speichern.

Die Steuerungseinrichtung 9 kann die Positionsdaten der aufgefundenen Fremdkörper 12 einem übergeordneten Datensystem bereitstellen, auf welches andere an der Erntekette beteiligte Maschinen zugreifen können. Ein übergeordnetes Steuerungssystem oder Steuerungseinrichtungen von in der Erntekette nachfolgenden landwirtschaftlichen Maschinen können daraus Hinweise generieren, um die Fahrer oder Bediener frühzeitig vor den Fremdkörpern 12 zu warnen.

Vorzugsweise ist für den Fahrer des Trägerfahrzeugs, an welchem das erfindungsgemäße Mähwerk 1 aufgenommen ist, eine Anzeige vorgesehen, die dem Fahrer einen Fremdkörperfund anzeigt. Als Anzeige kann beispielsweise ein - bei landwirtschaftlichen Geräten allgemein übliches - ISOBUS-Terminal oder ein anderes vergleichbares Anzeigegerät benutzt werden. Wenn dem Fahrer ein Fremdkörperfund angezeigt wird, dann kann dieser entscheiden, ob er den Fremdkörper direkt entfernt oder erst später anhand der aufgezeichneten GPS-Koordinaten. Sofern der Fahrer den Fremdkörper direkt entfernt hat, kann er über eine Eingabeeinrichtung dessen Koordinaten aus dem Datenbestand entfernen.

In der vorangehenden Beschreibung wurde das Mähwerk 1 sehr stark schematisiert dargestellt und auch nur die Bauteile beschrieben, welche für die vorliegende Erfindung relevant sind. Selbstverständlich weist ein erfindungsgemäßes Mähwerk 1 auch alle weiteren allgemein üblichen und dem Fachmann hinlänglich bekannten Bauteile auf.

### Bezugszeichenliste

- 1: Mähwerk
- 2: Mähbalken
- 3: Erntegut
- 4: Walzenaufbereiter
- 5: Aufbereitungswalze
- 6: Aufbereitungswalze
- 7: Drehachse
- 8: Drehachse
- 9: Steuerungseinrichtung
- 10: Hebel
- 11: Winkelsensor
- 12: Fremdkörper
- 13: GPS-System
- 14: Beschleunigungssensor

- x: Abstand
- s: Spalt
- b: Breite
- FR: Fahrtrichtung/Ernterichtung

## Patentansprüche

1. Mähwerk (1), mit mehreren Mähorganen, die unter Ausbildung eines Mähbalkens (2) nebeneinander positioniert sind und mit einem in Gutflussrichtung von gemähtem Erntegut (3) gesehen hinter dem Mähbalken (2) angeordneten Walzenaufbereiter (4), der eine obere Aufbereitungswalze (5) und eine untere Aufbereitungswalze (6) aufweist, wobei ein Spalt zwischen den Aufbereitungswalzen (5, 6), durch welchen das Erntegut (3) hindurch transportiert wird, abhängig von einer Menge des Ernteguts (3) veränderlich ist, **gekennzeichnet, durch** eine Einrichtung zur Erkennung oder zum Auffinden von Fremdkörpern (12) im gemähten Erntegut (3).

2. Mähwerk (1) nach Anspruch 1, **dadurch gekennzeichnet, dass** die untere Aufbereitungswalze (6) um eine untere, ortsfeste Drehachse (7) drehbar ist und die obere Aufbereitungswalze (5) zur Anpassung des Spaltes an die Menge des Erntegutes (3) um eine obere, verlagerbare Drehachse (8) drehbar ist, so dass die obere Drehachse (8) relativ zur unteren Drehachse (7) verlagerbar ist, wobei die obere Drehachse (8) dazu schwenkbar an Hebeln (10) angeordnet ist und ein Winkelsensor (11) vorgesehen ist, der die Auslenkung eines Hebels (10) kontinuierlich erfasst und die erfassten Messsignale an eine Steuerungseinrichtung (9) übermittelt, die dazu eingerichtet ist, aus den Messsignalen des Winkelsensors (11) kontinuierlich einen Abstand (x) zwischen den Drehachsen (7, 8) der Aufbereitungswalzen (5, 6) zu ermitteln und aus dem sich ändernden Abstand (x) eine Geschwindigkeit und/oder eine Beschleunigung abzuleiten, wobei die Steuerungseinrichtung (9) bei Überschreiten eines vorgegebenen Wertes der Geschwindigkeit und/oder der Beschleunigung ein Signal für das Auffinden eines Fremdkörpers (12) generiert.

3. Mähwerk (1) nach Anspruch 2, **dadurch gekennzeichnet, dass** die obere Aufbereitungswalze (5) an ihren beiden Enden schwenkbar an einem Hebel (10) gelagert ist und an jedem Hebel (10) ein Winkelsensor (11) vorgesehen ist, die beide die erfassten Messsignale an die Steuerungseinrichtung (9) übermitteln, und die Steuerungseinrichtung (9) die Abstände (x) und die Werte der Beschleunigung und/oder der Geschwindigkeit der beiden Winkelsensoren (11) miteinander vergleicht und daraus die Position des Fremdkörpers (12) in Richtung der Breite (b) der Aufbereitungswalzen (5, 6) ermittelt.

4. Mähwerk (1) nach Anspruch 2 oder 3, **dadurch gekennzeichnet, dass** die Steuerungseinrichtung (9) das Signal für das Auffinden eines Fremdkörpers (12) nur generiert, falls auch der Abstand (x) einen vorgegebenen Wert überschreitet.

5. Mähwerk (1) nach Anspruch 1, **dadurch gekennzeichnet, dass** die untere Aufbereitungswalze (6) um eine untere, ortsfeste Drehachse (7) drehbar ist und die obere Aufbereitungswalze (5) zur Anpassung des Spaltes an die Menge des Erntegutes (3) um eine obere, verlagerbare Drehachse (8) drehbar ist, so dass die obere Drehachse (8) relativ zur unteren Drehachse (7) verlagerbar ist, wobei sich der vertikale Abstand (x) zwischen den Drehachsen (7, 8) verändert und zur Erkennung von Fremdkörpern (12) ein Beschleunigungssensor (14) vorgesehen ist, der die Beschleunigung der oberen Aufbereitungswalze (5) in vertikaler Richtung ermittelt und die Beschleunigungswerte an eine Steuerungseinrichtung (9) übermittelt, die bei Überschreitung eines vorgegebenen Wertes der Beschleunigung ein Signal für das Auffinden eines Fremdkörpers (12) generiert.

6. Mähwerk (1) nach Anspruch 5, **dadurch gekennzeichnet, dass** der Beschleunigungssensor (14) an einer Stirnseite der oberen Aufbereitungswalze (5) angeordnet ist.

7. Mähwerk (1) nach Anspruch 5, **dadurch gekennzeichnet, dass** an beiden Stirnseiten der oberen Aufbereitungswalze (5) ein Beschleunigungssensor (14) angeordnet ist und beide Beschleunigungssensoren (14) die Beschleunigungswerte an die Steuerungseinrichtung (9) übermitteln und die Steuerungseinrichtung (9) die Beschleunigungswerte der beiden Beschleunigungssensoren (14) miteinander vergleicht und daraus die Position des Fremdkörpers (12) in Richtung der Breite (b) der Aufbereitungswalzen (5, 6) ermittelt.

8. Mähwerk (1) nach einem der vorhergehenden Ansprüche, **dadurch gekennzeichnet, dass** eine Steuerungseinrichtung (9) des Mähwerks (1) dazu eingerichtet ist, Positionsdaten eines GPS-Systems (13) zu empfangen und bei Auffinden oder Erkennen eines Fremdkörpers (12), dessen Positionsdaten zu speichern.
